# EUROPEAN PATENT APPLICATION

(11) **EP 2 538 335 A2**
(43) Date of publication of application: **26.12.2012**
(21) Application number: 12004565.3
(22) Date of filing: 18.06.2012
(51) Int. Cl.: G06F 13/10

(54) **Apparatus and method for sharing i/o device**

(30) Priority: 20.06.2011 JP 2011136175
(71) Applicant: HITACHI, LTD., Tokyo 100-8280 (JP)
(72) Inventor: Sugimoto, Ken, Tokyo 100-8220 (JP); Yamamoto, Junji, Tokyo 100-8220 (JP); Watanabe, Kenichi, Tokyo 100-8220 (JP)
(74) Representative: Strehl Schübel-Hopf & Partner

(57) **Abstract**

In a server apparatus in which a plurality of physical servers and an I/O device are connected via an I/O switch, when the plurality of physical servers share one I/O device, a tag included in a request packet transmitted from a first physical server to the I/O device is translated into a value that is not used in the I/O device in the I/O switch and thereafter the request packet is transferred to the I/O device, and then a tag included in a response packet which responds to the request packet and which is transmitted from the I/O device to the first physical server is restored to the original tag, so that conflict of tags when a plurality of physical servers share one I/O device is avoided.

## Description

### FIELD OF THE INVENTION

The present invention relates to a server apparatus including a plurality of physical servers, and in particular to a technique for sharing one I/O device by a plurality of physical servers.

### BACKGROUND OF THE INVENTION

In recent years, information security and compliance are emphasized, so that virus checking and e-mail filtering are performed on server apparatuses and the amount of processing required to be performed by server apparatuses in companies is increased. To cope with the increase of the amount of required processing, conventionally, a physical server is introduced for each processing item. However, the increase of the number of physical servers causes an increase in operational costs and the results in a problem that corporate IT budget is squeezed.

On the other hand, server integration attracts attention, in which processes performed by a plurality of physical servers are integrated into a single physical server and the number of physical servers is reduced. The server integration can reduce power consumption, space, failure repair cost, which are required in proportion to the number of the physical servers. In the background of rapid progress of the server integration, memory capacity and processor speed are increased by almost two times in every 18 months, so that the processing performance of physical servers is significantly improved.

Similarly, in recent years, the communication band between a physical server and an external apparatus is continuously improved by two times or more in every 18 months. As a standard of interface that connects a physical server and an external apparatus, for example, there are Ethernet (registered trademark) and Fibre Channel. When a physical server performs communication using these standards, one Ethernet I/O device (NIC: Network Interface Card) or one Fibre Channel I/O device (HBA: Host Bus Adapter) is connected to one physical server and the physical server performs communication via the I/O device. The communication between the physical server and the I/O device is generally performed by PCI Express (hereinafter referred to as PCIe) which is standardized by PCI-SIG.

Here, in the same manner as in the case that the server integration attracts attention, in which a plurality of physical servers are integrated into a single physical server on the basis of the improvement of the speeds of memory and processor, I/O sharing attracts attention, in which a plurality of physical servers share one I/O device on the basis of the improvement of the speed of interface. Although one physical server currently uses one I/O device, if a plurality of physical servers can share one I/O device by the I/O sharing, it is possible to reduce the number of I/O devices and reduce the cost of the server apparatus.

As a technique which realizes the I/O sharing, for example, there is a technique which makes it possible for a plurality of servers to share one I/O device designed to be connected to one physical server (see US2010/0082874) by using Single Root I/O Virtualization (SR-IOV) (see "Single-Root I/O Virtualization and Sharing Specification, Revision 1.0" issued in November 2007, written by PCI-SIG) which is standardized by PCI-SIG.

As a similar technique, there is Multi Root I/O Virtualization (MR-IOV) (see "Multi-Root I/O Virtualization and Sharing Specification, Revision 1.0" issued in May 2008, written by PCI-SIG) which is standardized by PCI-SIG. However, this technique has a problem that I/O devices compatible with MR-IOV are difficult to be procured.

### SUMMARY OF THE INVENTION

As described above, communication between a physical server and an I/O device is generally performed using PCIe. In PCIe, communication is performed using packets, the types of which include a request packet and a response packet responding to the request packet. In the communication between a physical server and an I/O device, when a request packet is transmitted, the next request packet can be transmitted without receiving a response packet responding to the previous request packet. These packets are identified using identifiers called "tag". Specifically, when the physical server and the I/O device is connected one for one, the same tag is given to a certain request packet and a response packet responding to the request packet and different tags are given to different request packets respectively. Thereby, the sequence control between the physical server and the I/O device is alleviated. In other words, a non-blocking transfer is possible between the physical server and the I/O device. For example, responding to a request packet for memory read, a response packet that returns a read value is invariably returned. The same tag is assigned to the memory read packet and the response packet. Thereby, for example, even when the physical server transmits a memory read 0 (tag 3) and a memory read 1 (tag 5) in this order and a response of the memory read 1 is returned earlier from the I/O device, the tag of the response packet is 5, so that the physical server can determine the memory read corresponding to the returned response by the tag even if the responses are not returned in the order of the memory read request packets.

Here, in an existing technique as described in US2010/0082874, in which a plurality of physical servers share one I/O device oriented to be used by a single physical server, there is a problem that the tag is not considered.

For example, when considering a case in which a physical server 0 and a physical server 1 share an I/O device 2, a packet including a tag 2 may be simultaneously transmitted from both the physical servers 0 and 1 to the I/O device 2. In this case, the packet including the tag 2 from the physical server 1 may arrive at the I/O device 2 after the packet including the tag 2 from the physical server 0 arrives at the I/O device 2 and before a process of the packet transmitted from the physical server 0 is completed in the I/O device 2, so that there may be a case in which the process cannot be performed correctly in the I/O device 2. An operation of the I/O device when a plurality of request packets having the same tag arrive at the I/O device at the same time as described above is not defined in the standard of PCIe.

In view of the above problem, an object of the present invention is to provide an I/O device sharing method and apparatus which can appropriately handle tags when a plurality of physical servers share an I/O device which is created to be used by only one physical server.

To achieve the above object, the present invention provides an I/O device sharing method for a plurality of physical servers to share one or more I/O devices connected via an I/O switch, wherein a packet including a tag is used in communication directed from the physical servers to the I/O device and communication directed from the I/O device to the physical servers, and a tag of a request packet transmitted from a first physical server to the I/O device is rewritten and changed to a tag that is not used in the I/O device and a tag of a response packet transmitted from the I/O device to the first physical server is restored to the original tag of the request packet before the change.

Also, to achieve the above object, the present invention provides a server apparatus including a plurality of physical servers, an I/O switch, and an I/O device that communicates with a plurality of the physical servers by using a packet including a tag, wherein the I/O switch includes a tag translation unit which rewrites and changes a tag of a request packet transmitted from a first physical server to the I/O device to a tag that is not used in the I/O device and which restores a tag of a response packet transmitted from the I/O device to the first physical server to the original tag of the request packet before the change.

Further, to achieve the above object, the present invention provides an I/O switch apparatus that performs communication between a plurality of physical servers and an I/O device by using a packet including a tag. The I/O switch apparatus includes a plurality of ports connected to a plurality of the physical servers and the I/O device respectively, a crossbar switch connected to a plurality of the ports, and a tag translation unit which rewrites and changes a tag of a request packet transmitted from a first physical server to the I/O device to a tag that is not used in the I/O device and which restores a tag of a response packet transmitted from the I/O device to the first physical server to the original tag of the request packet before the change.

According to the present invention, when a plurality of physical servers share one I/O device designed to be connected to one physical server, it is possible to avoid conflict of tags.

### BRIEF DESCRIPTION OF THE DRAWINGS

Fig. 1 is a block diagram showing a configuration example of a server apparatus according to embodiments;
Fig. 2 is a diagram showing a format of PCI Express according to the embodiments;
Fig. 3 is a diagram showing a format of PCI Express headers according to the embodiments;
Fig. 4 is a block diagram of a configuration example of a tag translation unit according to a first embodiment;
Fig. 5 is a diagram showing a flowchart of an operation of a transmitter tag translation module according to the first embodiment;
Fig. 6 is a diagram showing a flowchart of an operation of a receiver tag translation module according to the first embodiment;
Fig. 7 is a block diagram of a configuration example of the transmitter tag translation module according to the first embodiment;
Fig. 8A is a block diagram of a configuration example of a packet type detection module according to the first embodiment;
Fig. 8B is a diagram showing a table summing up types of packets of PCI Express according to the first embodiment;
Fig. 9 is a block diagram of a configuration example of the receiver tag translation module according to the first embodiment;
Fig. 10 is a block diagram of a configuration example of a last response detection module according to the first embodiment;
Fig. 11 is a block diagram of a configuration example of a tag pool according to the first embodiment;
Fig. 12 is a block diagram of a configuration example of a left tag control module according to the first embodiment;
Fig. 13 is a block diagram of a first configuration example of a timer monitoring module according to the first embodiment;
Fig. 14 is a block diagram of a second configuration example of a timer monitoring module according to the first embodiment;
Fig. 15 is a block diagram of a configuration example of a tag storing table according to the first embodiment;
Fig. 16 is a block diagram showing a flowchart when the tag translation unit according to the first embodiment is started; and
Fig. 17 is a diagram for explaining an operation example of a tag translation unit according to a second embodiment.

### DETAILED DESCRIPTION OF THE PREFERRED EMBODIMENTS

Hereinafter, embodiments of the present invention will be described in detail with reference to the drawings.

### First Embodiment

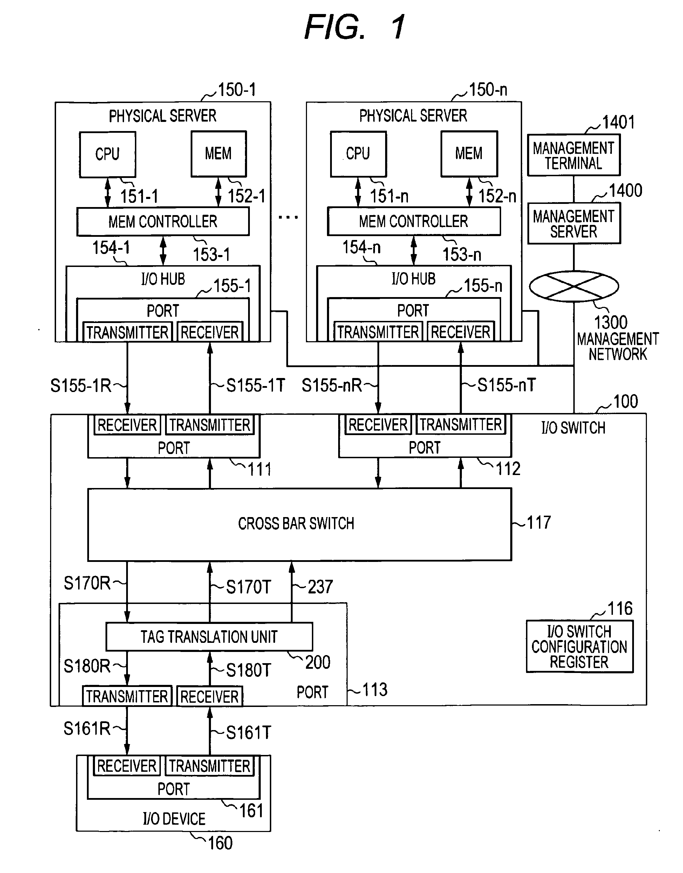

Fig. 1 is a block diagram showing a configuration example of a server apparatus to which a first embodiment is applied. In Fig. 1, the server apparatus includes n physical servers 150-1 to 150-n, an I/O device 160, an I/O switch 100 functioning as a data transfer apparatus that connects between the physical servers and the I/O device, and a management server 1400 that manages assignment of the I/O device to the physical servers 150-1 to 150-n. It is assumed that, for example, an interface compatible with standard of PCI Express (PCIe) developed by the PCI-SIG connects between the physical servers 150-1 to 150-n and the data transfer apparatus and between the data transfer apparatus and the I/O device. Although Fig. 1 shows an example in which there is one I/O switch 100 as the data transfer apparatus, the server apparatus can include a plurality of I/O switches. Further, although Fig. 1 shows an example in which one I/O device is connected to the I/O switch 100, the I/O switch 100 can have a plurality of I/O devices.

The physical servers 150-1 to 150-n, the management server 1400, and the I/O switch 100 are connected to each other by a management network 1300. As the management network 1300, LAN (Local Area Network), I2C (Inter-Integrated Circuit), and the like can be used.

The physical server 150-1 includes a processor 151-1 which is a processing unit, a memory 152-1 which is a storage unit, and an I/O hub 154-1. The processor 151-1, the memory 152-1, and the I/O hub 154-1 are connected to each other by a memory controller 153-1 that connects at least the processor, the memory, and the I/O hub. Further, the I/O hub 154-1 includes one or more ports 155-1 for PCIe transmission and reception. Although Fig. 1 shows an example in which there are one processor 151-1, one memory 152-1, and one I/O hub 154-1, the physical server 150-1 can include a plurality of processors 151-1, memories 152-1, and I/O hubs 154-1. All the physical servers 150-1 to 150-n and the management server 1400 whose detailed internal configuration is omitted can be configured by the same hardware.

The I/O device 160 includes a PCIe port 161 and the port 161 includes one or more PCIe transmission and reception ports.

The I/O switch 100 includes a plurality of ports 111 to 113, an I/O switch configuration register 116, and a crossbar switch 117. The crossbar switch 117 is a module that connects the ports 111 and 112 connected to the physical server and the port 113 connected to the I/O device with each other. The I/O switch 100 transfers a packet between the physical server connected to the port and the I/O device by a switch function of the crossbar switch 117. In the example of Fig. 1, the physical server 150-1 is connected to the port 111, the physical server 150-n is connected to the port 112, and the I/O device 160 is connected to the port 113. Therefore, in the configuration shown in Fig. 1, the physical servers 150-1 and 150-n can communicate with the I/O device 160. Although Fig. 1 shows an example in which there are three ports 111 to 113, there may be any number of ports of the I/O switch.

The port 113 connected to the device includes a transmitter and a receiver of PCIe and a tag translation unit 200 functioning as a tag translation unit which is a feature of the present embodiment. The tag translation unit 200 translates input signals S170R and S180T into output signals S180R and S170T respectively. S237 which is outputted from the tag translation unit 200 will be described later. Although Fig. 1 shows a configuration in which the tag translation unit is included in the port 113, the tag translation unit may be present as independent hardware outside the I/O switch 100 or may be present as software.

A management terminal 1401 including an input/output apparatus not shown in Fig. 1 is connected to the management server 1400, so that it is possible for an administrator or the like to perform setting of a register which is necessary for the tag translation unit described later.

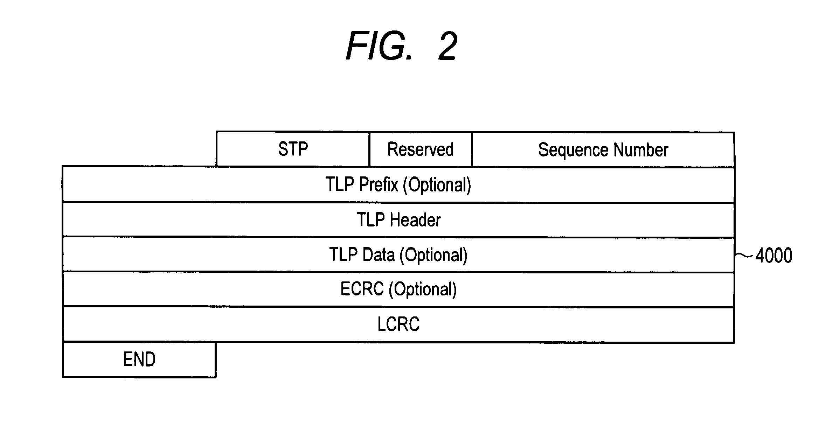

Here, a structure of a packet of TLP (Transaction Layer Protocol) of PCIe which can be used in the present embodiment will be described. As shown in Fig. 2, a TLP packet 4000 of PCIe includes a start frame (STP), a sequence number, a TLP Prefix, a TLP packet header, ECRC (End to End Cyclic Redundancy Check), LCRC (Link Cyclic Redundancy Check), and an end frame (END in Fig. 2).

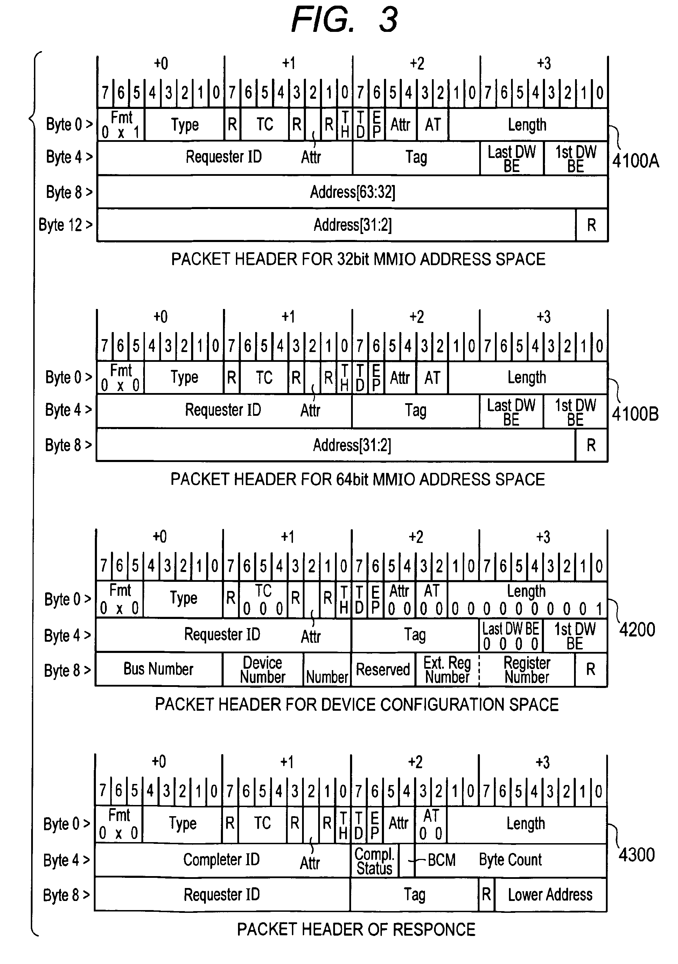

Fig. 3 shows detailed examples of a structure of the TLP packet header. There are some types of packet headers of PCIe for each access mode. A packet header 4100A is a header for performing access by using an address of 32-bit MMIO (Memory mapped I/O) space. A packet header 4100B is a header for performing access by using an address of 64-bit MMIO space. A packet header 4200 is a header for performing access by using a rooting ID for setting a configuration of a target device. A packet header 4300 is a header of a response packet to a request packet.

A packet that uses the packet header 4100A, 4100B, or 4200 is a request packet and a packet that uses the packet header 4300 is a response packet. There is a response packet in response to a request packet. However, there is not necessarily a response packet in response to every packet. For example, when a memory read, which is a request packet using an address of MMIO space, is transmitted from a physical server to the I/O device, the I/O device returns a read result to the physical server as a response packet. However, even when a memory write, which is a request packet using an address of MMIO space, is transmitted from a physical server to the I/O device, the I/O device does not return a response packet to the physical server.

In PCIe, a transaction ID is used as a unit for identifying a packet. In the packet headers 4100A, 4100B, and 4200, the transaction ID is a field including Requester ID and Tag indicated by bits 40 to 63. In the packet header 4300, the transaction ID is a field including Requester ID and Tag indicated by bits 72 to 95. As described above, the same transaction ID is set in a request packet and a response packet, and each request packet between one physical server and one I/O device is provided with a transaction ID different from each other.

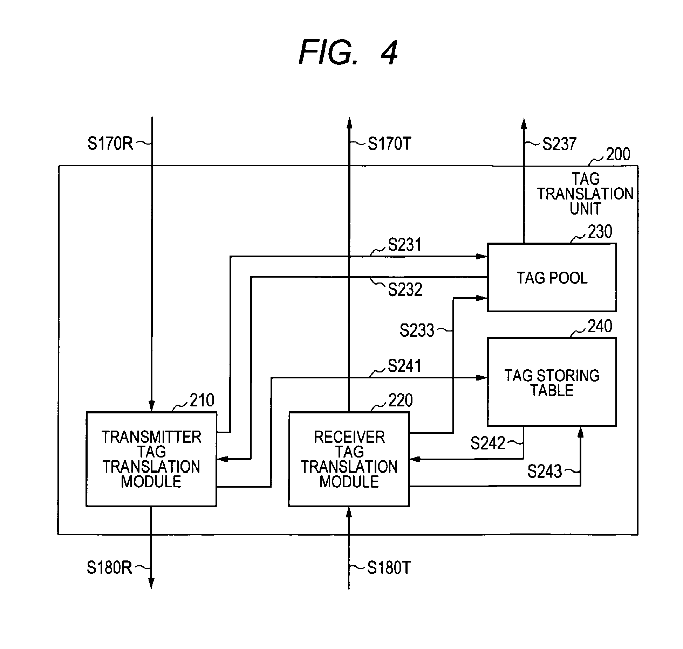

Fig. 4 is a block diagram showing an example of an internal configuration of the tag translation unit 200 of the present embodiment. The tag translation unit 200 includes a transmitter tag translation module 210, a receiver tag translation module 220, a tag pool 230, and a tag storing table 240. As described above, the tag translation unit may be present as independent hardware outside the I/O switch 100.

The tag translation unit 200 translates a part of a transaction ID of a packet header. The part to be translated is several bits arbitrarily extracted from the transaction ID. In the description below, the lower 8 bits of the transaction ID are translated and the 8 bits are referred to as a tag. However, the number of bits to be translated is not limited to 8 and the extracted bits are not limited to the lower bits.

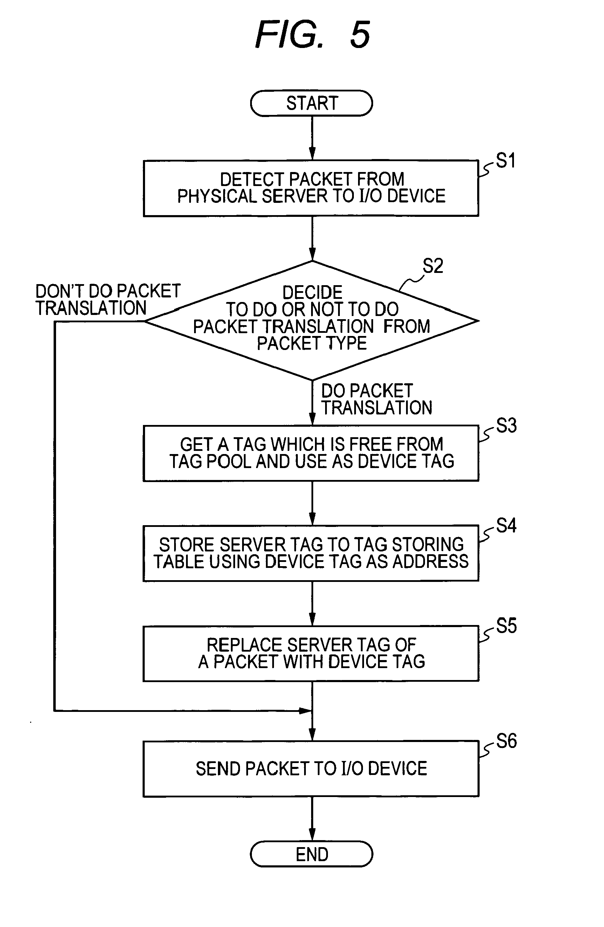

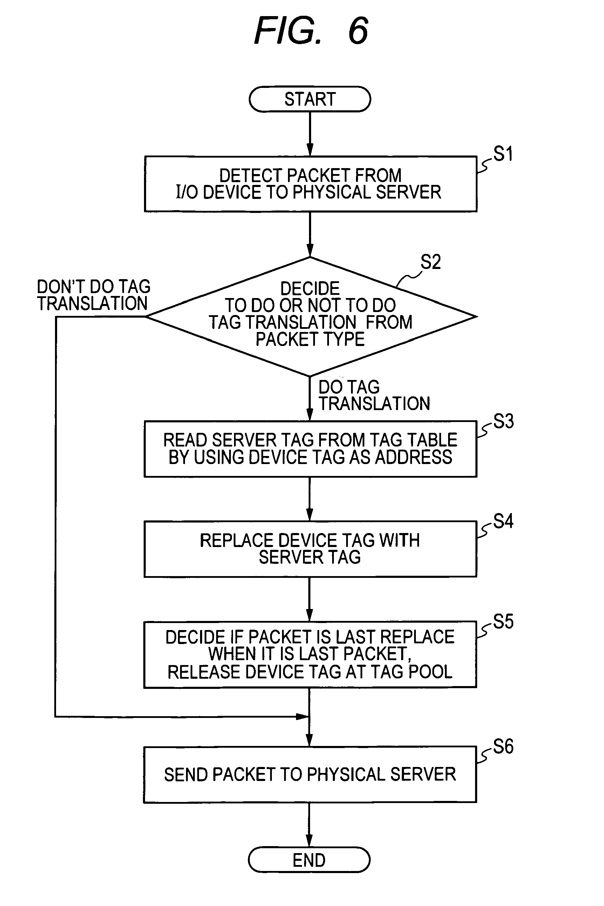

Figs. 5 and 6 show an entire flowchart of the tag translation unit of the present embodiment. Hereinafter, an operation of the tag translation unit will be described with reference to Figs. 5 and 6.

Fig. 5 shows an example of a tag translation operation of the transmitter tag translation module 210 when a request packet is transferred from the physical servers 150-1 to 150-n to the I/O device 160. First, in S1, the transmitter tag translation module 210 detects a request packet transmitted from the physical server to the I/O device. Next, in S2, the transmitter tag translation module 210 determines the type of the packet and determines whether or not the tag needs to be translated. The tag translation unit 200 may convert a request packet that does not request a response packet, but need not convert the request packet.

Next, in S3, when the tag needs to be translated, a tag is obtained from the tag pool 230. The tag pool 230 manages tags that are currently used in the I/O device and returns values of tags that are not currently used in the I/O device to the transmitter tag translation module 210. Hereinafter, a tag of a packet transmitted from a physical server is referred to as a sever tag, and a tag which is obtained from the tag pool and which is not used in the I/O device is referred to as a device tag. Unused tags in the tag pool 230 can be managed by using a free list, a bit map, and the like. In the tag pool 230, any value can be defined as unused as an initial value, and it is possible to set that the tag translation unit 200 does not use a specific tag.

In S4, a server tag of the packet transmitted from the physical server is stored in the tag storing table 240. The transmitter tag translation module 210 transmits a write request, a server tag, and a device tag to the tag storing table 240 and the tag storing table 240 holds the server tag on a RAM or a register using the device tag as an address on the basis of the write request. Thereby, the server tag of the packet transmitted from the physical server and the device tag are associated with each other and stored.

In S5, the server tag included in the packet header is replaced by the device tag obtained from the tag pool 230. Thereby, the tag included in the packet header of the request packet is guaranteed to have a unique value in the I/O device. Finally, in S6, a packet for translating tag or a packet for not translating tag is selected and transmitted to the I/O device.

Fig. 6 shows an example of an operation of the receiver tag translation module 220 when a response packet is transferred from the I/O device 160 to the physical servers 150-1 to 150-n. First, in S1, the receiver tag translation module 220 detects a packet transmitted from the I/O device to the physical server. Next, in S2, the receiver tag translation module 220 determines the type of the packet and determines whether or not the tag needs to be translated. The tag translation unit 200 need not convert a tag of a request packet in the response direction.

Next, in S3, the server tag is read from the tag storing table 240. The receiver tag translation module 220 transmits a read request and a device tag to the tag storing table 240 and the tag storing table 240 accesses a RAM or a register using the device tag as an address and returns the server tag, which is a read result, to the receiver tag translation module 220. In S4, the device tag included in the packet header is replaced by the server tag read from the tag storing table 240. Thereby, the tag of the packet can be restored to the server tag. In S5, it is determined whether or not the response packet is the last packet, and a tag release signal to the tag pool 230 is generated on the basis of the determination result to release the tag in the tag pool. Once the tag release signal is transmitted to the tag pool 230, the transmitter tag translation module 210 can use the same tag again for the I/O device.

In PCIe, the response packet may be divided into a plurality of response packets to the request packet. In this case, if the device tag is released in the tag pool 230 before the last response packet is returned from the I/O device, the tag may be used again by the transmitter tag translation module 210. As a result, it may be resulted that a plurality of request packets having the same tag arrive at the I/O device. Therefore, a process is performed in which the release signal to the tag pool 230 is not generated when the response packet is not the last packet. Then, the release signal generated here and the device tag to be released are transmitted to the tag pool 230 to release the tag. Finally, in S6, the packet is transmitted to the physical server.

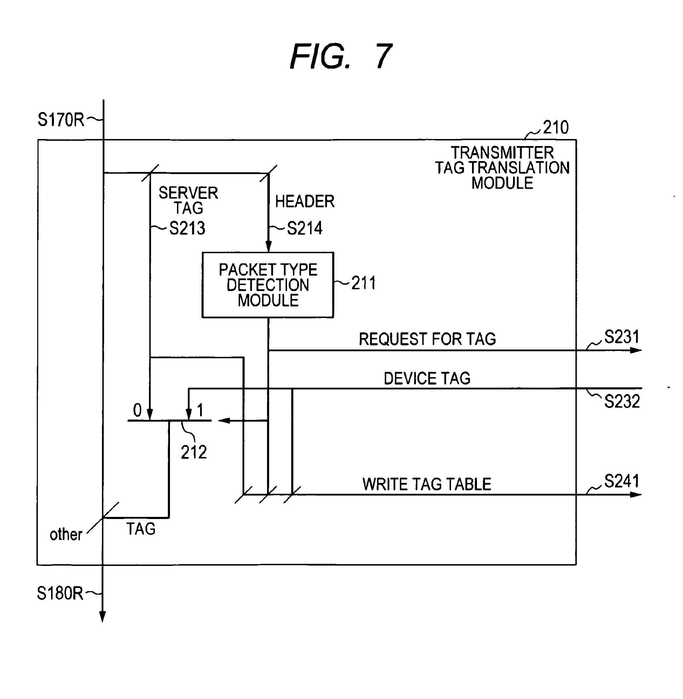

Fig. 7 shows an example of a circuit diagram of the transmitter tag translation module 210 according to the present embodiment. In the configuration shown in Fig. 7, a server tag S213 and a packet header S214 are extracted from the input signal S170R. The packet header S214 is inputted into a packet type detection module 211 and the packet type detection module 211 determines whether or not to perform tag translation. An output of the packet type detection module 211 is transmitted to the tag pool 230 as a tag request signal S231. The tag pool 230 returns a device tag S232 which is not used in the I/O device to the transmitter tag translation module 210 on the bases of the tag request signal S231. Next, either one of the server tag S213 and the device tag S214 is selected by a selector 212 on the basis of the tag request signal S231, and the tag of the packet header is replaced by the selected tag. Then, the packet in which the tag is replaced is transmitted to the I/O device by the output signal S180R. The tag request signal, the sever tag, and the device tag are collectively transmitted to the tag storing table 240 as S241.

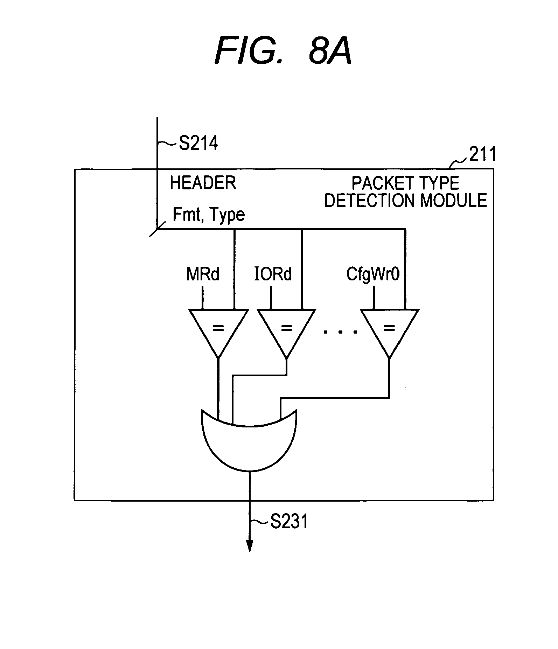

Fig. 8A shows an example of a circuit diagram of the packet type detection module 211 included in the transmitter tag translation module 210 according to the present embodiment. The packet type can be determined by, for example, a field of Fmt or Type included in a packet header of PCIe. Fmt and Type are included in a field of bits 24 to 31 in all the packets as shown in the diagrams of packet headers in Fig. 3.

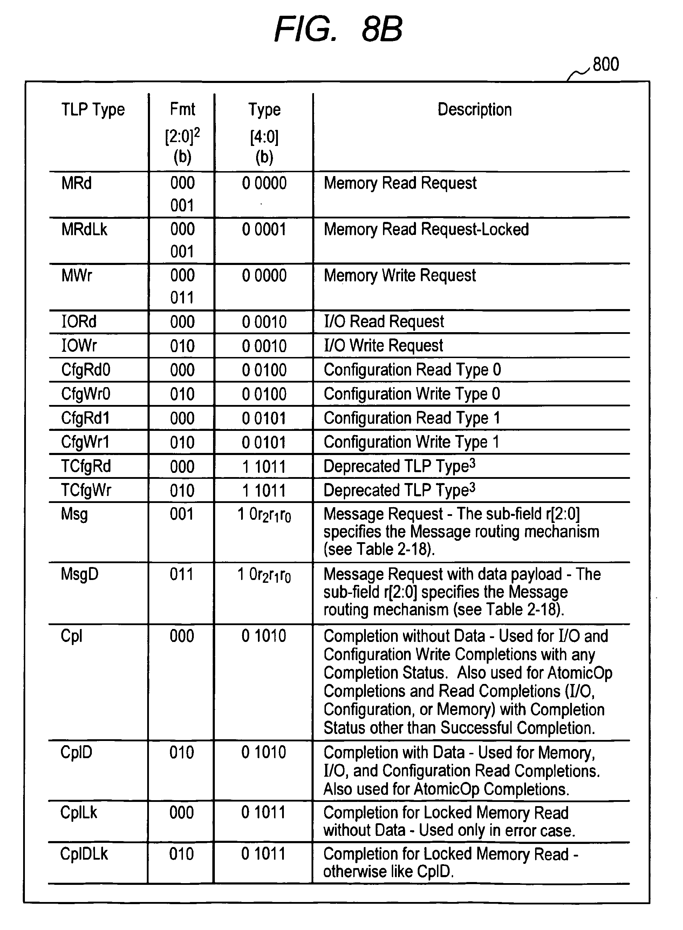

Fig. 8B shows a list of types of packets for each Fmt and Type. When comparators and an OR circuit are prepared as shown in Fig. 8A according to the packet type list 800 shown in Fig. 8B, it is possible to enable a tag request only for a necessary packet type. A tag translation is required only for a request packet that requires a response packet, so that, for example, the packet type detection module 211 has to enable a tag replace request only for MRd, MRdLk, I/ORd, I/OWr, CFgRd0, CFgWr0, CFgRd1, CFgWr1, TCFgRd, and TCFgWr in Fig. 8B, which are request packets that require a response packet. When some packet types are not used, the packet types for which the tag translation is performed can be further narrowed down. Also, the packet types for which the tag translation is performed can be set to changeable by setting.

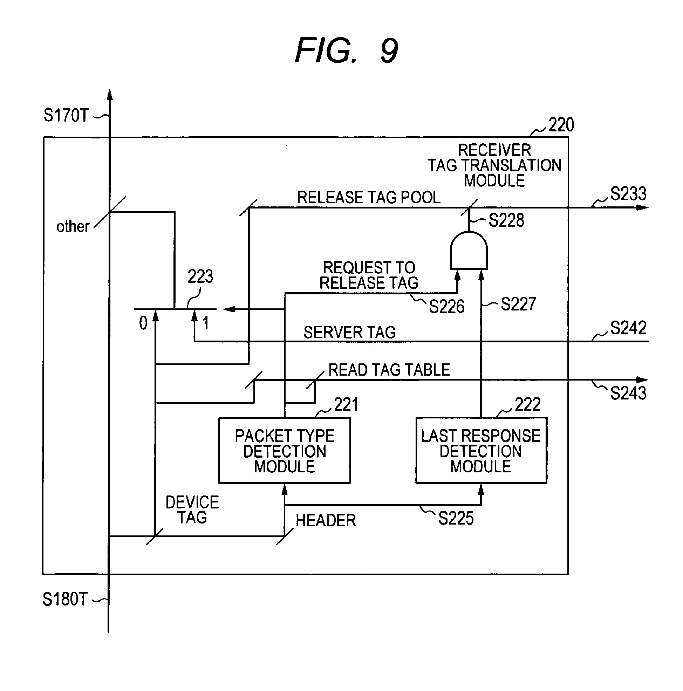

Fig. 9 shows an example of a circuit diagram of the receiver tag translation module 220 according to the present embodiment. In the configuration shown in Fig. 9, a device tag S224 and a packet header S225 are extracted from the input signal S180T. The packet header S225 is inputted into a packet type detection module 221 and a last response detection module 222. An output S226 of the packet type detection module 221 is first combined with the device tag S224 as a tag release request signal and transmitted to the tag storing table 240 as S243. The tag storing table 240 reads a value of the server tag using a value of the device tag as a key on the basis of the tag release request and returns the value to S242.

Next, either one of the device tag S224 and the server tag S242 is selected by a selector 223 on the basis of the tag release request signal of S226, and the tag of the packet header is replaced by the selected tag. Next, the header S225 is inputted into the last response detection module 222 and determination is performed. A logical AND between the tag release request S226 and the last response determination result is carried out to create a last response determination mask tag release request S228. Then, the device tag S224 and the last response determination mask tag release request S228 are combined together and transmitted to the tag pool 230. In the tag pool 230, the device tag is released when the tag release request is enabled.

The packet type detection module 221 is similar to the packet type detection module 211 shown in the transmitter tag translation module 210. For example, the receiver tag translation module 220 has to perform tag translation only for response packet, so that the receiver tag translation module 220 has to output a tag release request only for Cpl, CplD, CplLk, and CplLkD in the table shown in Fig. 8B. In the same manner as in the packet type detection module 211, when some packet types are not used, the packet types for which the tag translation is performed can be further narrowed down, and the packet types for which the tag translation is performed can be set to changeable by setting.

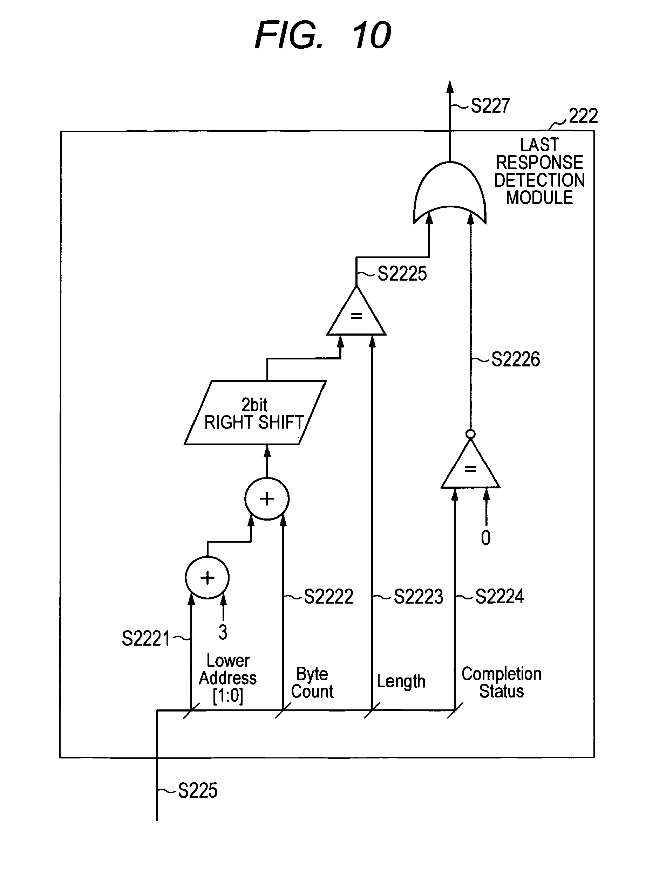

Fig. 10 shows an example of a circuit diagram of the last response detection module 222 included in the receiver tag translation module 220. In the configuration shown in Fig. 10, from the packet header of the response packet, the lower 2 bits of the Lower Address field are extracted to S2221, the Byte Count field is extracted to S2222, the Length field is extracted to S2223 , and the Completion Status field is extracted to S2224, and then a final determination of the response packet is performed by using the extracted fields.

In the packet header 4300 shown in Fig. 3, the Lower Address field is included in bits 64 to 71, the Byte Count field is included in bits 32 to 43, the Length field is included in bits 0 to 9, and the Completion Status field is included in bits 45 to 47. The Lower Address field indicates lower bits of an access destination address, the Byte Count field indicates the total number of bytes of data returned by response packets that have been returned in response to a certain request packet including data attached to this packet, the Length field indicates the total number of double words that must be returned in response to the certain request packet, and the Completion Status field indicates whether the response packet is a normal response packet or a response packet including an error. Here, one double word has four bytes.

In the configuration of the last response detection module shown in Fig. 10, first, it is determined whether or not the response packet is a normal packet by checking the Completion Status field. According to the standard, "0" of the Completion Status indicates a normal response packet and the other values indicate that an error occurs in the response packet, so that the determination is performed by comparing the Completion Status with "0", that is, a value indicating that S2224 is normal. Then, a logical NOT of the value, that is, "0" when the packet is normal and "1" when the packet includes an error, is stored in S2226. Next, in a normal packet, it is determined whether the packet is a last packet or not. Whether the packet is a last packet or not can be determined by checking whether a value obtained by calculating (lower 2 bits of Lower Address)+3+(Byte Count) >>2 is equal to the Length field as shown in Fig. 10. The result of the above is stored in S2225. Finally, a logical OR between S2225 and S2226 is carried out, so that S227 is enabled when the packet includes an error or the packet is determined to be a last packet and it is transmitted that the packet is the last packet.

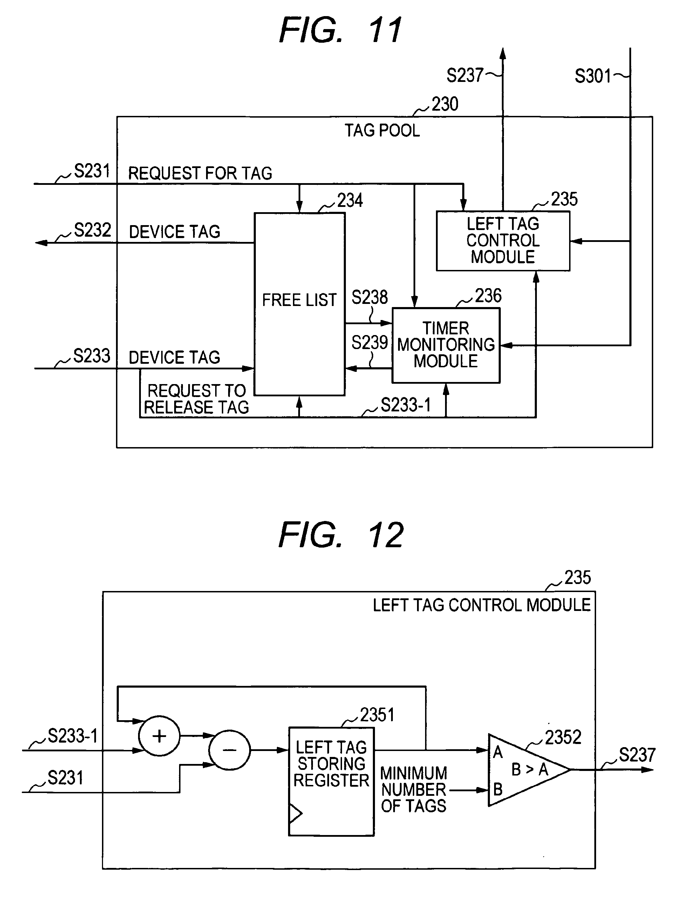

Fig. 11 shows an example of a circuit diagram of the tag pool 230 in Fig. 4. In the configuration shown in Fig. 11, the tab pool 230 includes a free list 234 and can include a left tag control module 235 and a timer monitoring module 236. The free list 234 receives a tag request from the transmitter tag translation module 210 via S231, extracts one tag from the free list in response to the tag request, and transfers the tag to the transmitter tag translation module 210 as a device tag via S232. Also, the free list 234 receives a tag release request from the receiver tag translation module 220 via S233 and writes back the device tag to the free list according to the tag release request. By the control as described above, there are only tags that are not used in the I/O device in the free list.

Fig. 12 shows an example of the left tag control module 235 in Fig. 11. In the configuration shown in Fig. 12, the left tag control module 235 includes a left tag storing register 2351 and a comparator 2352. For example, the number of tags included in the free list is set in the tag remaining number register 2351. When a tag release request signal S233-1 is enabled, the number of tags is incremented by 1, and when a tag request signal S231 is enabled, the number of tags is decremented by 1. Thereby, the remaining number of tags currently remaining in the free list 234 is held in the tag remaining number register 2351. The comparator 2352 compares the tag remaining number register 2351 with the minimum number of tags that must remain in the free list 234 and when the number of tags that remain in the free list 234 is smaller than the minimum number of tags that must remain, the comparator 2352 asserts S237 to notify that the number of tags is insufficient.

As shown in Fig. 1, the S237 signal is outputted to the crossbar switch 117. In the present embodiment, the crossbar switch 117 performs control, such as, preventing a port having the tag translation unit 200 from inserting a new packet into the tag translation unit 200 on the basis of the S237 signal. In the configuration of the server apparatus shown in Fig. 1, it is possible to prevent the crossbar switch 117 from inserting a new packet into the port 113 by inputting the S237 signal into a portion of the crossbar switch 117 corresponding to the port 113. For example, the minimum number of tags that must remain in the free list 234 can be set in the register 116 of the I/O switch 100 from the management server 1400 shown in Fig. 1 via the management network 1300.

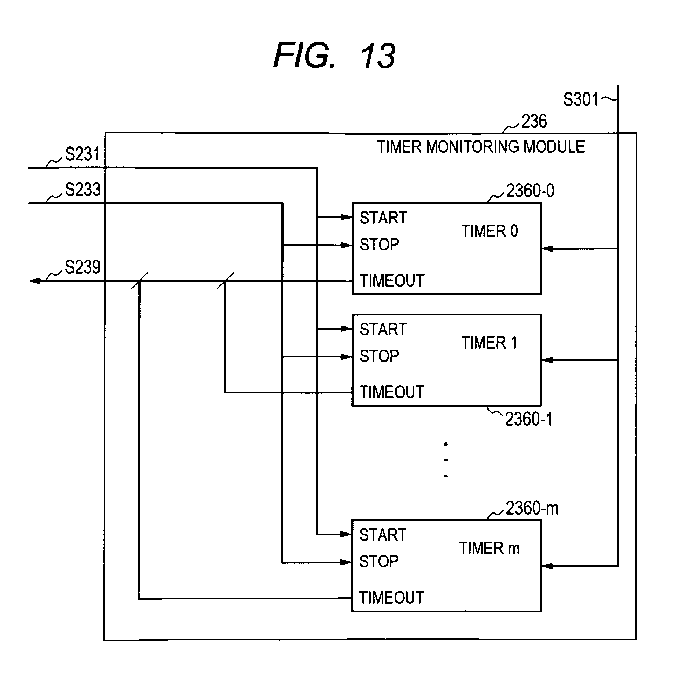

Fig. 13 shows a first configuration example of the timer monitoring module 236 in Fig. 11. In the configuration shown in Fig. 13, the timer monitoring module 236 includes timers 2360-0 to 2360-m corresponding to each of the tags included in the free list 234, respectively. The timeout times of the timers 2360-0 to 2360-m can be set in a register of the I/O switch from the management server via S301 from management network 1300 in the same manner as for the left tag control module 235. The timeout times are set to be longer than a timeout time of PCIe. Every time the tag request signal S231 is asserted and a new tag is transmitted from the free list 234 to the transmitter tag translation module 210, a start signal of a timer corresponding to the tag transmitted from the free list 234 is asserted and count is started from 0, and every time the tag release request signal S233 is asserted and a tag is returned to the free list 234, a stop signal of a timer corresponding to the tag returned to the free list 234 is asserted and the timer is turned off. Thereby, the timer generates a timeout only when the stop signal is not asserted even if waiting for a time longer than the timeout time of PCIe after the start signal is asserted. Specifically, this means that the tag corresponding to the timer does not pass through the receiver tag translation module 220 even if waiting for the timeout time after the tag is used in the transmitter tag translation module 210.

Therefore, it is assumed that a request packet transferred from the physical servers 150-1 to 150-n shown in Fig. 1 to the I/O device 160 is discarded in the I/O device 160 by some kind of cause such as an error. Thus, it is assumed that the request packet that used the tag corresponding to the timer that times out does not remain in the I/O device, so that the tag corresponding to the timer can be used again in the transmitter tag translation module 210. Therefore, for example, the timer monitoring module 236 notifies the free list 234 of the timeout of the timer and a number of the tag corresponding to the timer via S239, and the free list 234 releases the tag. Or, the timer monitoring module 236 notifies the management server 1400 of the timeout of the timer and a number of the tag corresponding to the timer, so that the management server 1400 can release the tag in the free list 234 by software.

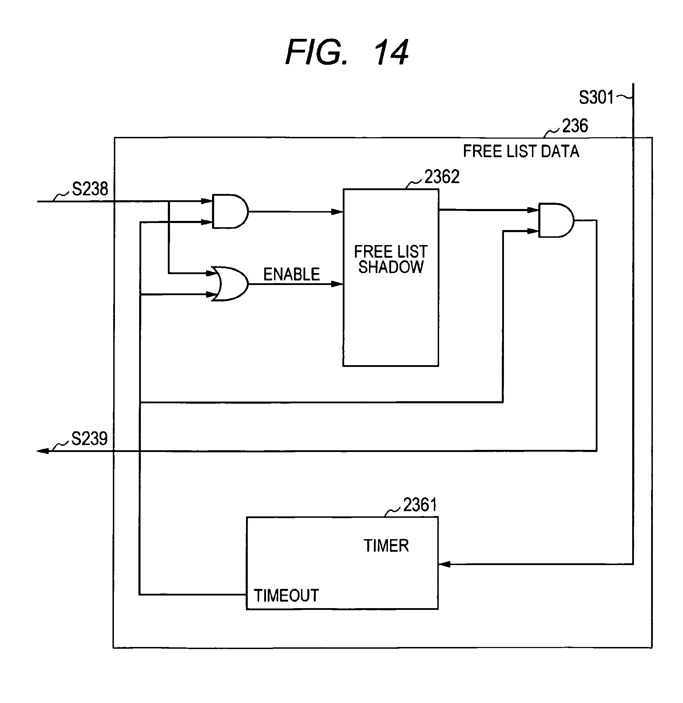

Fig. 14 shows a second configuration example of the timer monitoring module 236 in Fig. 11. The configuration shown in Fig. 14 has the same function as that of the configuration shown in Fig. 13. In the configuration shown in Fig. 14, the timer monitoring module 236 includes a timer 2361 and a free list shadow 2362. A timeout time of the timer 2361 can be set from the management server 1400 via S301 from management network 1300 in the same manner as in the configuration shown in Fig. 13. The timeout time is set to be longer than the timeout time of PCIe. In the configuration shown in Fig. 14, data currently remaining in the free list 234 is received from S238. When a timeout occurs, all values in the free list 234 are copied to the free list shadow 2363. Thereafter, the state of the free list 234 is monitored at all times until the next timeout occurs, and a tag which was used when the copy was performed at the first timeout and which is returned from the receiver tag translation module 220 is released in the free list shadow 2362.

A tag which was not used when the copy was performed at the first timeout and a tag which is once released in the free list shadow 2362 are not secured until a copy due to the next timeout is performed. By doing this, a time longer than the timeout time of PCIe elapses from a certain timeout to the next timeout. Therefore, if there is a tag that is not released at a timeout in the free list shadow 2362, this means that the tag does not pass through the receiver tag translation module 220 even if waiting for the timeout time after the tag is used in the transmitter tag translation module 210 in the same manner as the case in which the timer times out in the configuration shown in Fig. 13. Therefore, if a logical AND between a value of the free list shadow 2362 and the timeout of the timer is carried out and the result of the logical AND is transmitted to the free list 234 or the management server 1400, the free list 234 can release the tag in the same manner as in Fig. 13.

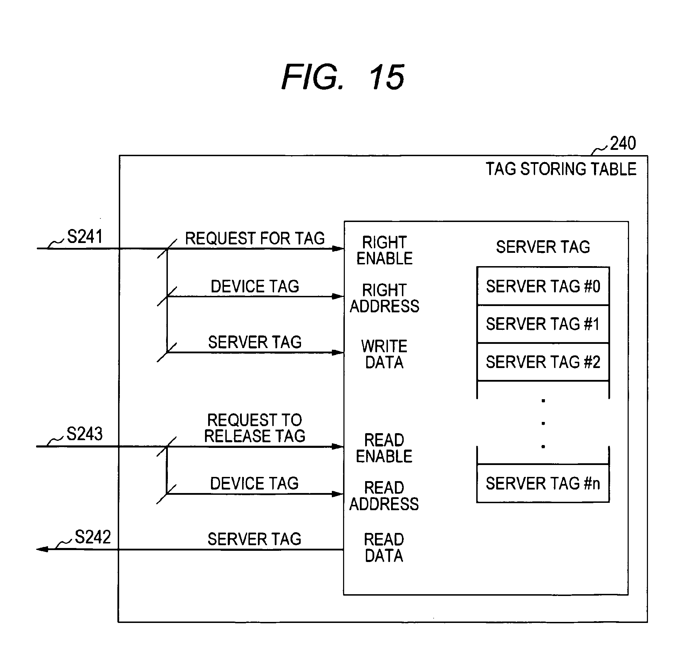

Next, Fig. 15 shows an example of a configuration of the tag storing table 240 in Fig. 4. In the configuration shown in Fig. 15, the tag storing table 240 stores a value of the server tag on a RAM or a register. The tag storing table 240 receives a tag request signal, a device tag, and a server tag from the transmitter tag translation module 210 via S241 and stores the server tag using the device tag as an address on the basis of the tag request signal. Then, the tag storing table 240 receives a tag release request signal and a device tag from the receiver tag translation module 220 via S243 and reads a server tag using the device tag as an address on the basis of the tag release request signal. Then, the tag storing table 240 returns the server tag to the receiver tag translation module 220 via S242. Thereby, the tag translated by the transmitter tag translation module 210 can be restored to the original tag by the receiver tag translation module 220.

Although not shown in the drawings, the tag storing table 240 can hold values other than server tags attached to packets. An example of information held by the tag storing table 240 is a VH (Virtual Hierarchy) number. When data is transmitted and received using packets between the physical servers 150-1 to 150-n and the I/O device 160 in the configuration shown in Fig. 1, numbers need to be given to the physical servers 150-1 to 150-n to identify the physical servers 150-1 to 150-n. When the I/O switch 100 in Fig. 1 is compatible with a multi-route I/O virtualization technique (hereinafter referred to as MR-IOV), in the port 113, the physical servers 150-1 to 150-n are identified based on VH numbers defined on the MR-IOV. When the I/O switch 100 is compatible with the MR-IOV and the I/O device 160 is not compatible with the MR-IOV, it is necessary to remove a VH number attached to a packet transmitted from the physical servers 150-1 to 150-n and attach again the VH number to a response packet. Here, the VH number is stored in the tag storing table 240 and the VH number is read at the same time when the receiver tag translation module 220 reads the tag storing table 240, so that it is possible to attach again the VH number to the response packet.

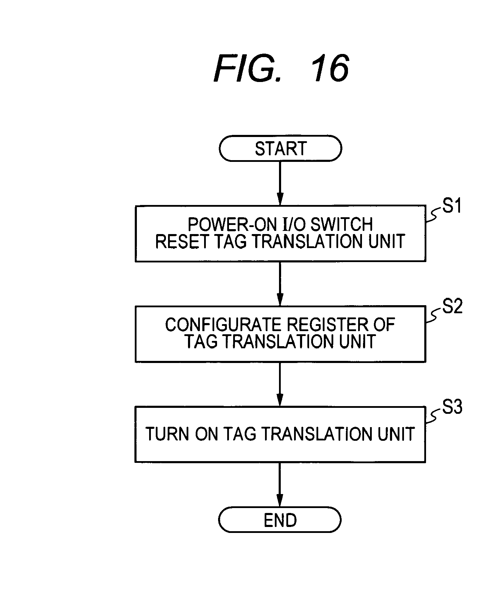

Fig. 16 shows an example of an initialization sequence of the tag translation unit 200 of the present embodiment. First, in S1, the power of the I/O switch 100 is turned on. Thereby, the inside of the I/O switch is reset and the tag translation unit 200 is also reset. The port 113 includes a register (not shown in the drawings) on which whether or not to use the tag translation unit 200 is configured. In S1, the I/O switch 100 starts up under a setting in which the tag translation unit 200 is not used. Next, in S2, internal registers of the tag translation unit 200 are set from the management terminal 1401 which includes an input/output apparatus and which is included in the management server 1400 by an operation of an administrator or the like. For example, the minimum number of tags of the left tag control module 235 included in the tag pool 230 and the timeout times of the timer monitoring module 236 are set at this stage. The above information is set in the internal register 116 of the I/O switch 100 via the management network 1300. Finally, in S3, the management server 1400 turns on the tag translation unit 200, so that the tag translation becomes available.

### Second Embodiment

Next, a second embodiment will be described. A server apparatus to which the second embodiment is applied also has the configuration shown in Fig. 1. The I/O switch 100 is compatible with the MR-IOV, and in the port 113, the physical servers 150-1 to 150-n are identified by VH numbers.

In the I/O device 160, as described in the first embodiment, a packet is identified by the transaction ID included in a request packet, that is, a combination of Requester ID and Tag indicated by bits 40 to 63 of the packet headers 4100A, 4100B, and 4200. In the transaction ID, the range used by the Requester ID is set by using BIOS (Basic Input Output System) running on the physical servers 150-1 to 150-n or EFI (Extensible Firmware Interface) and Tag is set by the I/O hubs 154-1 to 154-n. A part of the field of Requester ID can be fixed to 0 by limiting the arrangement of the Requester ID by the BIOS or the EFI and a part of the field of Tag can be fixed to 0 by limiting the arrangement of the Tag by the I/O hubs 154-1 to 154-n.

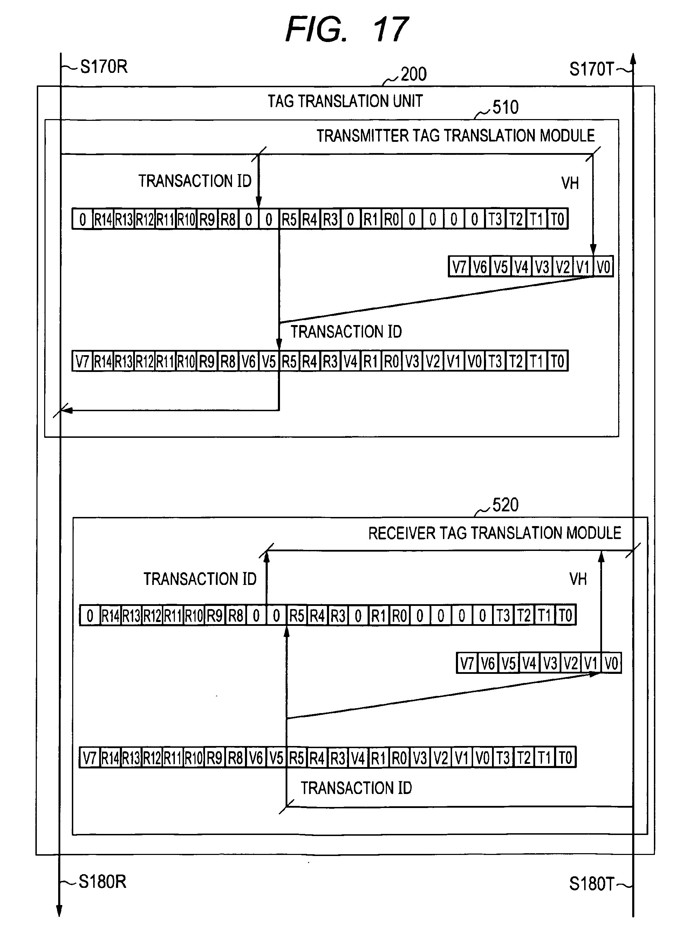

Fig. 17 shows an example of an operation of the tag translation unit 200 according to the second embodiment. In the example shown in Fig. 17, 8 bits are used as the VH number and 8 bits of the transaction ID are fixed to 0 as a server apparatus by using the BIOS and the EFI described above and the I/O hubs154-1 to 154-n. In a transmitter tag translation module 510 of the tag translation unit 200, as shown in Fig. 17, the VH number assigned to the physical servers 150-1 to 150-n is inserted into fields fixed to 0 in the transaction ID. A VH number having an independent value is assigned to each of the physical servers 150-1 to 150-n, so that the transaction ID between one physical server and one I/O device is guaranteed to be a unique value at all times. Therefore, the value in which the VH number is inserted into positions fixed to 0 in the transaction ID is a unique value as seen from the I/O device even when a plurality of physical servers share one I/O device.

In a receiver tag translation module 520, the VH number is extracted from the fields fixed to 0 in the transaction ID and the fields from which the VH number is extracted are filled with 0 again. Thereby, the transaction ID of the packet can be the same value as that of the transaction ID when the physical server transmits the packet. Although Fig. 17 shows an example in which a part of the transaction ID is fixed to 0, a part of the transaction ID may be fixed to 1 or values including 0 and 1.

The present invention described above in detail is not limited to the embodiments described above, and the present invention includes various modified examples. For example, the above embodiments are described in detail in order to be easily understood and the present invention is not limited to the embodiments which include all the components described above. Addition, deletion, or replacement of components can be performed on a part of configurations of the embodiments. For example, although the server apparatus is described by illustrating a configuration including one I/O switch and one I/O device, the present invention can be applied to a configuration including a plurality of I/O switches and a system configuration including a plurality of I/O devices.

Although a case is mainly described in which a part or all of the above components, functions, processing units, and processing means are realized by hardware, which is designed using, for example, integrated circuits, the above-described tag translation unit and the like may be realized by software by executing a program that realizes the function of the mechanism.

## Claims

1. An I/O device sharing method for a plurality of physical servers to share an I/O device connected via an I/O switch, wherein
a packet including a tag is used in communication directed from the physical servers to the I/O device and communication directed from the I/O device to the physical servers, and
a tag of a request packet transmitted from a first physical server to the I/O device is rewritten and changed to a tag that is not used in the I/O device and a tag of a response packet transmitted from the I/O device to the first physical server is restored to the original tag of the request packet before the change.

2. The I/O device sharing method according to claim 1, wherein
the I/O switch determines a type of the packet used in communication from the first physical server to the I/O device and if the packet is a packet requesting no response packet, the I/O switch transmits the packet to the I/O device without rewriting and changing the tag.

3. The I/O device sharing method according to claim 1, wherein
the I/O switch manages tags that are not used in the I/O device in a tag pool,
when the I/O switch rewrites and changes a tag of a request packet transmitted from the first physical server to the I/O device to a tag in the tag pool, the I/O switch receives the response packet transmitted from the I/O device to the first physical server, and
when the I/O switch restores a tag of the response packet to the original tag of the request packet before the change, the I/O switch returns the tag of the response packet to the tag pool.

4. The I/O device sharing method according to claim 3, wherein
the I/O switch manages the number of tags that are not used in the I/O device, and
when the number of tags that are not used in the I/O device becomes smaller than or equal to a predetermine value, the I/O switch stops transmission of the request packet to the I/O device.

5. The I/O device sharing method according to claim 3, wherein
when the I/O switch rewrites and changes a tag of a request packet transmitted from the first physical server to the I/O device to a tag that is not used in the I/O device, the I/O switch monitors time in which the I/O device uses the rewritten and changed tag, and if a time longer than a predetermined time elapses, the I/O switch determines that the I/O device no longer uses the tag.

6. A server apparatus comprising:
a plurality of physical servers;
an I/O switch; and
an I/O device that communicates with a plurality of the physical servers by using a packet including a tag,
wherein the I/O switch includes a tag translation unit which rewrites and changes a tag of a request packet transmitted from a first physical server to the I/O device to a tag that is not used in the I/O device and which restores a tag of a response packet transmitted from the I/O device to the first physical server to the original tag of the request packet before the change.

7. The server apparatus according to claim 6, wherein
the tag translation unit determines a type of the packet used in communication from the first physical server to the I/O device and if the packet is a packet requesting no response packet, the tag translation unit transmits the packet to the I/O device without rewriting and changing the tag.

8. The server apparatus according to claim 6, wherein
the tag translation unit manages tags that are not used in the I/O device in a tag pool, and
when the tag translation unit rewrites and changes a tag of a request packet transmitted from the first physical server to the I/O device to a tag that is not used in the I/O device, if the tag translation unit receives the response packet which responds to the request packet and which is transmitted from the I/O device to the first physical server, the tag translation unit returns a tag of the response packet to the tag pool.

9. The server apparatus according to claim 6, wherein
the I/O switch includes a plurality of ports connected to a plurality of the physical servers and the I/O device and a crossbar switch connected to a plurality of the ports, and
the tag translation unit manages the number of tags that are not used in the I/O device, and when the number of tags that are not used in the I/O device becomes smaller than or equal to a predetermine value, the tag translation unit outputs a signal, which stops transmission of the request packet to the I/O device, to the crossbar switch.

10. The server apparatus according to claim 6, wherein
the tag translation unit further includes a tag storing table in which a tag of a request packet transmitted from the first physical server to the I/O device is associated with the tag rewritten and changed to a tag that is not used in the I/O device and stored.

11. An I/O switch apparatus that performs communication between a plurality of physical servers and an I/O device by using a packet including a tag, the I/O switch apparatus comprising:
a plurality of ports connected to a plurality of the physical servers and the I/O device respectively;
a crossbar switch connected to a plurality of the ports; and
a tag translation unit which rewrites and changes a tag of a request packet transmitted from a first physical server to the I/O device to a tag that is not used in the I/O device and which restores a tag of a response packet transmitted from the I/O device to the first physical server to the original tag of the request packet before the change.

12. The I/O switch apparatus according to claim 11, wherein
the tag translation unit is disposed in the port connected to the I/O device, and
the tag translation unit determines a type of the packet used in communication from the first physical server to the I/O device and if the packet is a packet requesting no response packet, the tag translation unit transmits the packet to the I/O device without rewriting and changing the tag.

13. The I/O switch apparatus according to claim 12, wherein
the tag translation unit manages tags that are not used in the I/O device in a tag pool, and
when the tag translation unit rewrites and changes a tag of a request packet transmitted from the first physical server to the I/O device to a tag that is not used in the I/O device, if the tag translation unit receives the response packet which responds to the request packet and which is transmitted from the I/O device to the first physical server, the tag translation unit returns a tag of the response packet to the tag pool.

14. The I/O switch apparatus according to claim 13, wherein
the tag translation unit manages the number of tags that are not used in the I/O device, and when the number of tags that are not used in the I/O device becomes smaller than or equal to a predetermine value, the tag translation unit outputs a signal, which stops transmission of the request packet to the I/O device, to the crossbar switch.

15. The I/O switch apparatus according to claim 13, wherein
the tag translation unit further includes a tag storing table in which a tag of a request packet transmitted from the first physical server to the I/O device is associated with the tag rewritten and changed to a tag that is not used in the I/O device and stored, and
when the tag translation unit receives a response packet, which responds to the request packet and which is transmitted to the first physical server, from the I/O device, the tag translation unit restores a tag of the response packet to the original tag of the request packet transmitted from the first physical server by using the tag storing table.
